# EUROPÄISCHE PATENTANMELDUNG

(11) **EP 3 561 932 A1**
(43) Veröffentlichungstag der Anmeldung: **30.10.2019**
(21) Anmeldenummer: 18275057.0
(22) Anmeldetag: 26.04.2018
(51) Int. Cl.: H01M 8/18

(54) **REDOX-FLOW-BATTERIE MIT EINEM POLYOXOMETALLAT ELEKTROLYTEN UND VERFAHREN ZUM BETREIBEN EINER REDOX-FLOW-BATTERIE**

(71) Anmelder: Siemens Aktiengesellschaft, 80333 München (DE)
(72) Erfinder: Fleck, Robert, 91325 Adelsdorf (DE); Friedl, Jochen, Newcastle Upon Tyne, NE3 3NJ (GB); Holland-Cunz, Matthäa, Newcastle upon Tyne, NE2 1RE (GB); Schricker, Barbara, 91058 Erlangen (DE); Stimming, Ulrich, Newcastle upon Tyne, NE15 9JT (GB); Wolfschmidt, Holger, 91058 Erlangen (DE); Steinbacher, Frank, 90542 Eckental (DE)

(57) **Zusammenfassung**

Die Erfindung betrifft eine Redox-Flow-Batterie und ein Verfahren zum Betreiben einer Redox-Flow-Batterie sowie einen Ladungsträger und ein Herstellungsverfahren für den Ladungsträger. Die Redox-Flow-Batterie umfasst eine erste Kammer und eine zweite Kammer welche von einer Membran voneinander getrennt werden. In der ersten Kammer liegt ein Katholyt vor. In der zweiten Kammer liegt ein Anolyt vor. Als Ladungsträger in dem Katholyt und/oder dem Anolyt wird dabei ein Polyoxometallat mit Lithium als Kation verwendet. Weiterhin betrifft die Erfindung ein Herstellungsverfahren zum Herstellen eines Polyoxometallats mit Lithium als Kation.

## Beschreibung

Die Erfindung betrifft eine Redox-Flow-Batterie und ein Verfahren zum Betreiben einer Redox-Flow-Batterie.

Die Nachfrage nach Strom schwankt im tageszeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Batterien sind Speicher für elektrische Energie auf elektrochemischer Basis und geeignet, die überschüssige Energie zu speichern. Handelt es sich um einen wiederaufladbaren Speicher wird dieser auch Akkumulator genannt. Ein einzelnes wiederaufladbares Speicherelement wird auch Sekundärelement genannt.

Bei Redox-Flow-Batterien ist, im Unterschied zu klassischen Sekundärelementen, das elektrodenaktive Material flüssig. Dieser flüssige Elektrolyt wird in einem Tank gelagert und in einen Kathodenraum mit einer Kathode und/oder in einen Anodenraum mit einer Anode gepumpt. Kathodenraum und Anodenraum werden typischerweise durch eine Membran voneinander getrennt. An den Elektroden wird das elektrodenaktive Material reduziert, beziehungsweise oxidiert. Der flüssige Elektrolyt umfasst als elektrodenaktives Material, oder in anderen Worten als Ladungsträger, zweckmäßigerweise ein Reduktions-Oxidations-Paar.

Um eine ausreichend große Menge an Energie mittels der Ladungsträger speichern zu können, sollte deren Konzentration im Elektrolyt einerseits möglichst hoch sein. Andererseits darf die Löslichkeit des Ladungsträgers in dem Elektrolyt nicht überschritten werden, um ein Ausfallen von Kristallen in der Redox-Flow-Batterie zu vermeiden. Diese Kristalle führen nachteilig zu einer Verschlechterung des Wirkungsgrades der Redox-Flow-Batterie, da nicht mehr die gesamte Menge an Molekülen als Ladungsträger bereit steht. Im schlimmsten Fall kommt es nachteilig sogar zu einem Verstopfen von Elektroden und/oder Leitungen der Redox-Flow-Batterie und somit zu einem Betriebsausfall der Redox-Flow-Batterie.

Es ist daher Aufgabe der Erfindung einen Ladungsträger, eine Redox-Flow-Batterie und ein Verfahren zum Betreiben einer Redox-Flow-Batterie anzugeben, welche bei einem hohen Wirkungsgrad, hoher Energie - und Leistungsdichte langfristig störungsfrei Energie speichert.

Die Aufgabe wird mit einer Redox-Flow-Batterie gemäß Anspruch 1 einem Verfahren zum Betreiben einer Redox-Flow-Batterie gemäß Anspruch 5 und einem Ladungsträger gemäß Anspruch 9 sowie einem Herstellungsverfahren für den Ladungsträger gemäß Anspruch 10 gelöst.

Die erfindungsgemäße elektrisch wiederaufladbare Redox-Flow-Batterie umfasst eine erste Kammer und eine zweite Kammer, wobei die erste Kammer von der zweiten Kammer mittels einer Membran getrennt ist. Die erste Kammer umfasst eine Kathode. Die zweite Kammer umfasst eine Anode. In der ersten Kammer liegt ein Katholyt vor und in der zweiten Kammer liegt ein Anolyt vor. Der Anolyt und/oder der Katholyt umfasst erfindungsgemäß ein Polyoxometallat mit der Summenformel Li_{X}H_{Y} [PV₁₄O₄₂]. Besonders bevorzugt umfasst der Katholyt das erfindungsgemäße Polyoxometallat.

Erfindungsgemäß wird diese Redox-Flow-Batterie mit dem erfindungsgemäßen Polyoxometallat betrieben, um Energie zu speichern.

Die Erfindung betrifft weiterhin ein Polyoxometallat für die Verwendung als Ladungsträger, in anderen Worten Ladungsdonor beziehungsweise Ladungsakzeptor, in einer Redox-Flow-Batterie mit der Summenformel Li_{X}H_{Y} [PV₁₄O₄₂].

Weiterhin betrifft die Erfindung ein Herstellungsverfahren zur Herstellung des Polyoxometallats. Zunächst wird eine Lösung durch Lösen von wenigstens 2 mol/l LiVO₃ in deionisiertem Wasser hergestellt. Anschließend wird die Lösung gefiltert. In einem nächsten Schritt wird die Lösung von Nebenprodukten, insbesondere von Vanadiumpentoxid V₂O₅ und Vanadiumtrioxid VO₃⁻ und Verunreinigungen gereinigt.

Vorteilhaft löst sich der erfindungsgemäße Ladungsträger mit Lithium als Kationen deutlich besser als konventionelle Polyoxometallate. Als konventionelle Polyoxometallate sind Moleküle gemeint, welche als Kationen Natrium oder Kalium aufweisen. Die Löslichkeit dieses auf Lithium basierten Polyoxometallats vergrößert sich im Vergleich zu den bekannten Kationen um das doppelte. Dies ermöglicht eine höhere Menge Energie zu speichern, da eine größere Menge des Ladungsträgers in dem Elektrolyt gelöst werden kann ohne dass ein Ausfällen von Kristallen stattfindet. Vorteilhaft werden dadurch die Energie- und Leistungsdichter erhöht sowie der Wirkungsgrad der Redox-Flow-Batterie verbessert. Weiterhin wird die Dauer eines wartungsfreien Betriebs verlängert, da das Ausfallen von Kristallen vermieden wird.

In einer vorteilhaften Ausgestaltung und Weiterbildung der Erfindung liegt X in einem Bereich von 1 bis 9 und Y in einem Bereich von 9 minus X (als Formel: Y = 9-X).

In einer vorteilhaften Ausgestaltung und Weiterbildung der Erfindung erfolgt der Reinigungsschritt des Herstellungsverfahrens mittels Kristallisation. Dabei wird Phosphorsäure zur Lösung dazugegeben. Damit wird ein pH-Wert in einem Bereich zwischen 2, 1 und 2, 5 eingestellt, um als Zwischenprodukt [PV₁₄O₄₂]⁹⁻ herzustellen. Anschließend wird Lithiumchlorid zur Lösung hinzugegeben. Die Lösung wird dann für wenigstens 12 Stunden bei 4 °C temperiert, um eine Kristallisation herbeizuführen. Anschließend wird die Lösung gefiltert und die Li_{X}H_{Y} [PV₁₄O₄₂] - Kristalle werden getrocknet. Vorteilhaft wird bei dieser Herstellungsmethode vermieden, dass Natrium oder Kalium als Kationen in dem Elektrolyt vorhanden sind.

In einer weiteren alternativen Ausgestaltung und Weiterbildung der Erfindung kann in dem Herstellungsverfahren anstelle des Kristallisationsschritts ein Reduktionsmittel hinzugegeben werden. Dabei wird zunächst ebenfalls der pH-Wert der Lösung in einem pH-Bereich zwischen 2,1 und 2,5 eingestellt. Als Reduktionsmittel eignet sich insbesondere Hydrazin, N₂H₄. Dieses Reduktionsmittel ermöglicht es, dass die unerwünschten Formen, insbesondere Vanadiumpentoxid V₂O₅ und Vanadiumtrioxid VO₃⁻, als Präzipitate ausfallen. Anschließend kann diese reduzierte Lösung, insbesondere durch eine Vakuumfiltration, gefiltert werden. Die ausgefallenen Verunreinigungen werden in diesem Schritt herausgefiltert, wodurch die Lösung gereinigt wird. Es ist möglich das Filtern mehrmals zu wiederholen, bis die gewünschte Reinheit erreicht wird. Nach diesem Filtrationsschritt ist die Vorbereitung des Elektrolyts für den Einsatz in der Redox-Flow-Batterie abgeschlossen. Vorteilhaft ist dieser Syntheseweg weniger Zeit intensiv, da die Kristallisation nicht nötig ist. Weiterhin wird mit dieser Syntheseroute eine hohe Reinheit in erreicht. Weiterhin kann Zeit eingespart werden, da es nicht nötig ist, die Kristalle wiederum in dem Elektrolyt zu lösen.

Dieser alternative Reduktionsschritt kann ebenso bei konventionellen Polyoxometallaten mit Natrium oder Kalium als Kationen eingesetzt werden. In diesem Fall wird ausgehend von KVO₃ oder NaVO₃ in deionisiertem, insbesondere in destilliertem, Wasser K_{X}H_{Y} [PV₁₄O₄₂] beziehungsweise Na_{X}H_{Y} [PV₁₄O₄₂] nach obigem Herstellungsverfahren synthetisiert. Danach wird der Reduktionsschritt durchgeführt. Anschließend werden schwer lösliche Partikel mittels Filtration entfernt.

In einer weiteren vorteilhaften Ausgestaltung und Weiterbildung der Erfindung umfasst der Anolyt und/oder der Katholyt insbesondere Salze, welche als Kationen ein Proton (H+) oder ein Lithiumkation (Li+) umfassen. Vorteilhaft wird dadurch keine zusätzliche Kationenart in den Elektrolyten eingebracht. Dadurch ist vorteilhaft auch gewährleistet, dass das Kation des Ladungsträgers Lithium bleibt, wodurch die hohe Löslichkeit weiterhin gewährleistet ist. Vorteilhaft bleibt somit der Wirkungsgrad der Redox-Flow-Batterie hoch.

In einer weiteren vorteilhaften Ausgestaltung und Weiterbildung der Erfindung umfasst der Anolyt und/oder der Katholyt insbesondere Salze, welche als Anion wenigstens ein Chlorid, ein Sulfat, ein Phosphat oder ein Carbonat aufweisen. Dadurch ist vorteilhaft gewährleistet, dass ein langzeitstabiles Anion eingebracht wird.

In einer weiteren vorteilhaften Ausgestaltung und Weiterbildung der Erfindung wird der pH-Wert während des Betriebs der Redox-Flow-Batterie kontrolliert und gegebenenfalls eingestellt. Dies sichert eine ausreichend hohe Löslichkeit des Ladungsträgers. Als Säure wird dabei Salzsäure verwendet. Als Base wird Lithiumhydroxid (LiOH) verwendet. Vorteilhaft wird somit auch mit der Base keine weitere Kationenart außer Lithium und Wasserstoff in den Elektrolyten zugeführt. Dadurch bleibt die ausreichend hohe Löslichkeit des Ladungsträgers im Elektrolyt gewährleistet. Vorteilhaft bleibt dadurch eine hohe Energiedichte, Leistungsdichte und ein ausreichend hoher Wirkungsgrad erhalten.

In einer weiteren vorteilhaften Ausgestaltung der Erfindung wird das erfindungsgemäße Polyoxometallat in einem katalytischen Prozess verwendet.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Redox-Flow-Batterie mit Li_{X}H_{Y} [PV₁₄O₄₂] als Ladungsträger;
- Figur 2: ein Verfahrensschema der Herstellung von Li_{X}H_{Y} [PV₁₄O₄₂] mittels Kristallisation;
- Figur 3: ein Verfahrensschema der Herstellung von Li_{X}H_{Y} [PV₁₄O₄₂] mittels Reduktion.

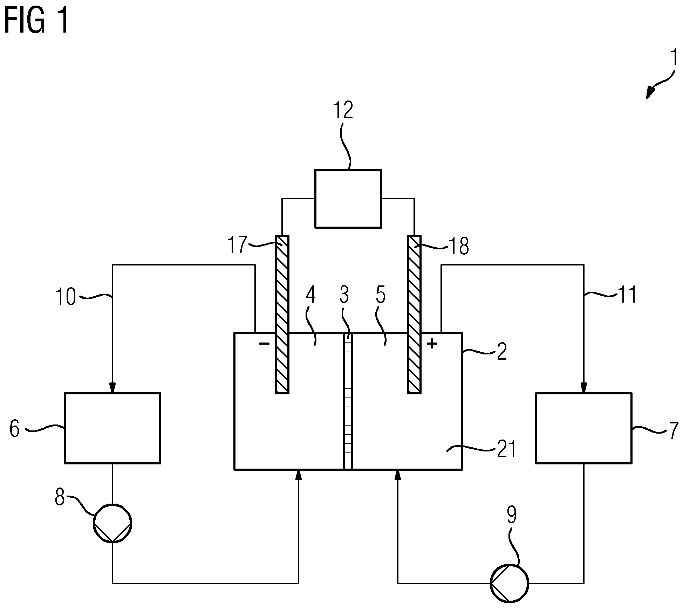

Figur 1 zeigt eine Redox-Flow-Batterie 1 mit einer Redox-Flow-Einheit 2. Die Redox-Flow-Einheit 2 umfasst eine erste Kammer 4 und eine zweite Kammer 5. Die erste Kammer 4 ist von der zweiten Kammer 5 durch eine Membran 3 voneinander getrennt. In der ersten Kammer 4 ist eine Kathode 17 angeordnet. In der zweiten Kammer 5 ist eine Anode 18 angeordnet. Die Kathode 17 und die Anode 18 sind an die Elektroenergie 12 angebunden. Eine erste Pumpe 8 pumpt einen Katholyt 10 durch die erste Kammer 4 und einen ersten Tank 6. Eine zweite Pumpe 9 pumpt einen Anolyt 11 durch die zweite Kammer 5 und einen zweiten Tank 7. In diesem Beispiel ist im Katholyt 10 ein Polyoxometallat mit Lithium (Li_{X}H_{Y} [PV₁₄O₄₂]) als Kationen als Ladungsträger, oder in anderen Worten als Ladungsdonor beziehungsweise Ladungsakzeptor, vorhanden. Vorteilhaft kann dadurch eine große Menge des Ladungsträgers in dem Katholyt gelöst werden. Dadurch kann die Energiemenge, die in der Redox-Flow-Batterie 1 gespeichert werden kann, vorteilhaft erhöht werden. Außerdem wird gewährleistet, dass die Löslichkeitsgrenze des Polyoxometallats nicht erreicht wird.

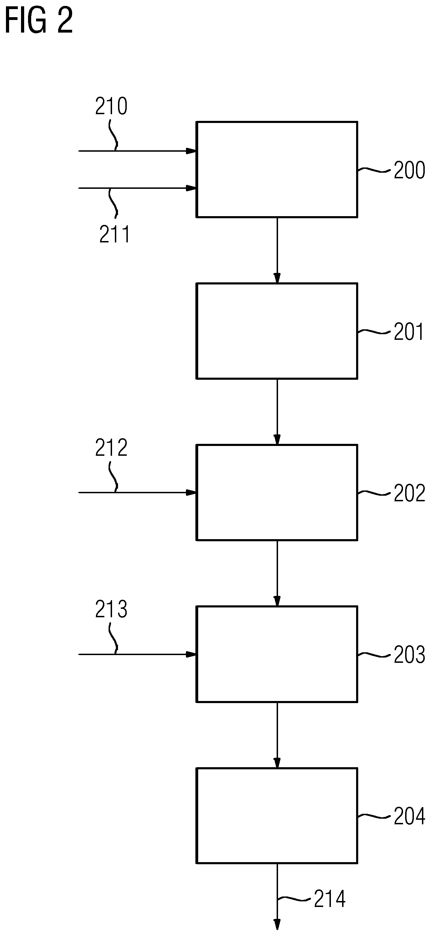

Figur 2 zeigt ein Schema des Herstellungsverfahrens für ein Polyoxometallat mit Lithium als Kationen (Li_{X}H_{Y} [PV₁₄O₄₂]) mittels Kristallisation. Zunächst erfolgt das Herstellen einer Lösung 200. Die Lösung wird durch Zugabe von destilliertem Wasser 210 und von 211 hergestellt. Anschließend wird diese Lösung gefiltert 201. In einem nächsten Schritt erfolgt das Einstellen des pH-Wertes 202 durch Zugabe von Phosphorsäure 212. Anschließend erfolgt eine Kristallisation 203 durch Zugabe eines Kristallisationskeims in Form von Lithiumchlorid 213. Anschließend erfolgt ein Filtern und Trocknen 204 der kristallisierten Lösung. Als Produkt erhält man somit ein Polyoxometallat mit Lithium als Kation (Li_{X}H_{Y} [PV₁₄O₄₂]) 214.

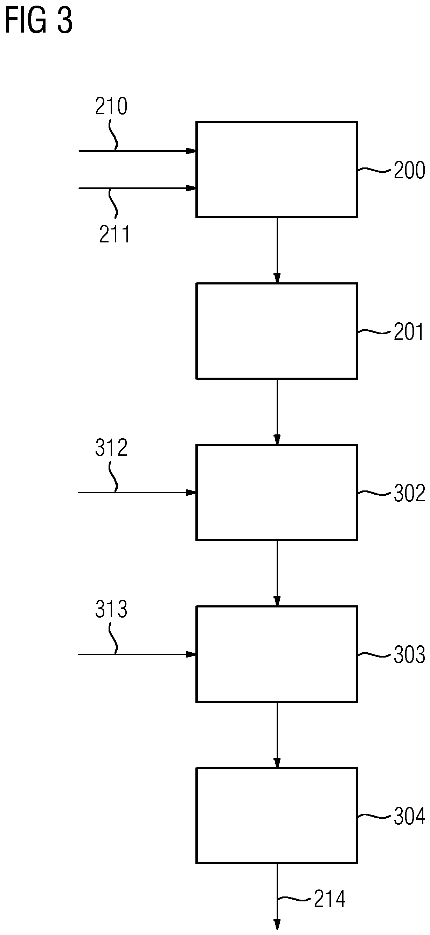

Figur 3 zeigt ein Schema des Herstellungsverfahrens für ein Polyoxometallat mit Lithium als Kationen (Li_{X}H_{Y} [PV₁₄O₄₂]) mittels Reduktion und Filterung. Zunächst erfolgt analog zum vorher genannten Herstellungsverfahren das Herstellen einer Lösung 200. Die Lösung wird durch Zugabe von destilliertem Wasser 210 und von 211 hergestellt. Anschließend wird diese Lösung gefiltert 201. In einem nächsten Schritt erfolgt die Zugabe von Phosphorsäure 312, vorteilhafterweise wird ein pH-Wert von 2,3 eingestellt. Anschließend erfolgt die Zugabe von Hydrazin 313 als Reduktionsmittel. Diese Reduktion verursacht ein Ausfallen der Nebenprodukte V₂O₅ und VO₃⁻, da die reduzierte Form in der Lösung nicht lösbar ist. Anschließend erfolgt ein erneutes Filtern und Trocknen 304 der Lösung. Als Produkt erhält man ein Polyoxometallat mit Lithium als Kation (Li_{X}H_{Y} [PV₁₄O₄₂]) 214. Vorteilhaft kann dieser Herstellungsprozess schneller als der alternative Herstellungsprozess mittels Kristallisation erfolgen. Weiterhin werden vorteilhaft wenige zusätzliche Komponenten in das System eingebracht, insbesondere wenige organische Lösungsmittel.

### Bezugszeichenliste

- 1: Redox-Flow-Batterie
- 2: Redox-Flow Einheit
- 3: Membran
- 4: erste Kammer
- 5: zweite Kammer
- 6: erster Tank
- 7: zweiter Tank
- 8: erste Pumpe
- 9: zweite Pumpe
- 10: Katholyt
- 11: Anolyt
- 12: Elektroenergieanbindung
- 17: Kathode
- 18: Anode
- 20: Katholyt mit Li_{X}H_{Y} [PV₁₄O₄₂]
- 21: Anolyt mit Li_{X}H_{Y} [PV₁₄O₄₂]
- 200: Herstellen einer Lösung
- 201: Filtern
- 202: Einstellen des pH-Wertes
- 203: Kristallisation
- 204: Filtern und Trocknen
- 210: Wasser
- 211: LiVO3
- 212: Phosphorsäure
- 213: Lithiumchlorid
- 214: Li_{X}H_{Y} [PV₁₄O₄₂]
- 302: Einstellen des pH-Wertes
- 303: Reduzieren
- 304: Filtern
- 312: Phosphorsäure
- 313: Hydrazin

## Patentansprüche

1. Elektrisch wiederaufladbare Redox-Flow-Batterie (1) mit einer ersten Kammer (4) und einer zweiten Kammer (5), wobei die erste Kammer (4) von der zweiten Kammer (5) mittels einer Membran (3) getrennt ist und wobei die erste Kammer (4) eine Kathode (17) umfasst und die zweite Kammer (5) eine Anode (18) umfasst und in der ersten Kammer (4) ein Katholyt (10) vorliegt und in der zweiten Kammer (5) ein Anolyt (11) vorliegt, **dadurch gekennzeichnet, dass** der Anolyt (11) und/oder der Katholyt (10) ein Polyoxometallat (214) mit der Summenformel Li_{X}H_{Y} [PV₁₄O₄₂] umfasst.

2. Redox -Flow-Batterie (1) nach Anspruch 1, wobei das Polyoxometallat (214) mit der Summenformel Li_{X}H_{Y} [PV₁₄O₄₂] mit X in einem Bereich von 1 bis 9 und Y = 9 - X vorliegt.

3. Redox-Flow-Batterie (1) nach Anspruch 1 oder 2, wobei der Anolyt (11) und/oder der Katholyt (10) als eine wässrige Lösung wenigstens eines der folgenden Kationen aufweisen: Wasserstoffproton, Lithiumkation.

4. Redox-Flow-Batterie (1) nach einem der vorhergehenden Ansprüche, wobei der Anolyt (11) und/oder der Katholyt (10) als eine wässrige Lösung wenigstens eines der folgenden Anionen aufweisen: Chlorid, Sulfat, Phosphat, Carbonat.

5. Verfahren zum Betreiben einer Redox-Flow-Batterie (1) gemäß den Ansprüchen 1 bis 4, wobei als Ladungsträger ein Polyoxometallat (214) mit der Summenformel Li_{X}H_{Y} [PV₁₄O₄₂] verwendet wird.

6. Verfahren gemäß Anspruch 5, wobei als Ladungsträger ein Polyoxometallat (214) mit der Summenformel Li_{X}H_{Y}[PV₁₄O₄₂] verwendet wird, wobei X in einem Bereich von 1 bis 9 liegt und Y = 9 -X ist.

7. Verfahren gemäß einem der Ansprüche 5 oder 6, wobei ein pH-Wert gemessen wird und auf der Messung basierend ein optimaler pH-Wert mittels der Base Lithiumhydroxid (LiOH) oder Salzsäure eingestellt wird.

8. Polyoxometallat (214) mit der Summenformel Li_{X}H_{Y} [PV₁₄O₄₂] für die Verwendung als Ladungsträger in einer Redox-Flow-Batterie (1).

9. Polyoxometallat (214) mit der Summenformel Li_{X}H_{Y} [PV₁₄O₄₂] für die Verwendung in katalytischen Prozessen.

10. Polyoxometallat (214) mit der Summenformel Li_{X}H_{Y} [PV₁₄O₄₂] für den Einsatz als Ladungsträger in einer Redox-Flow-Batterie (1), wobei X in einem Bereich von 1 bis 9 liegt und Y = 9 - X ist.

11. Verfahren zum Herstellen des Polyoxometallats gemäß Anspruch 8 mit folgenden Schritten:
- Herstellen einer Lösung durch Lösen von wenigstens 2 mol/l (211) in deionisiertem Wasser (210),
- Filtern der Lösung,
- Reinigen der Lösung von unerwünschten Komponenten, insbesondere von Vanadiumpentoxid V₂O₅ und Vanadiumtrioxid VO₃⁻.

12. Verfahren nach Anspruch 11, wobei das Reinigen der Lösung mittels Kristallisation erfolgt und folgende Schritte umfasst:
- Zugeben von konzentrierter Phosphorsäure (212),
- Einstellen des pH-Wertes auf einen pH-Bereich zwischen 2,1 und 2,5, um [PV₁₄O₄₂]⁹⁻ herzustellen,
- Zugeben von LiCl (213) zur Lösung und Temperieren der Lösung für wenigstens 12 Stunden bei 4 °C zur Kristallisation,
- Filtern und Trocknen der Li_{X}H_{Y} [PV₁₄O₄₂]- Kristalle (214) .

13. Verfahren nach Anspruch 11, wobei das Reinigen mittels eines Reduktionsmittels und einer Filterung erfolgt und folgende Schritte umfasst:
- Einstellen des pH-Wertes auf einen pH-Bereich zwischen 2,1 und 2,5,
- Zugeben eines Reduktionsmittels,
- wenigstens einmaliges Filtern der Lösung.

14. Verfahren nach Anspruch 13, wobei als das Reduktionsmittel Hydrazin (N₂H₄) verwendet wird.

15. Verfahren nach einem der Ansprüche 11 bis 14, wobei das Filtern mittels einer Vakuumfiltration erfolgt.
